# EUROPEAN PATENT APPLICATION

(11) **EP 4 654 313 A1**
(43) Date of publication of application: **26.11.2025**
(21) Application number: 25177428.7
(22) Date of filing: 19.05.2025
(51) Int. Cl.: H01M 10/0525, H01M 10/0562

(54) **SOLID ELECTROLYTE SHEET, AND ALL-SOLID STATE BATTERY INCLUDING THE SAME**

(30) Priority: 21.05.2024 KR 20240066003
(71) Applicant: SK On Co., Ltd., Seoul 03161 (KR)
(72) Inventor: JEONG, Yi Su, 34124 Daejeon (KR)
(74) Representative: Stolmár & Partner Patentanwälte PartG mbB

(57) **Abstract**

A solid electrolyte sheet 100 includes a first solid electrolyte layer 10 and a second solid electrolyte layer 20, respectively including a solid electrolyte. During LSV analysis according to linear sweep voltammetry, in the first solid electrolyte layer 10, a voltage at which an oxidation peak appears is more than 2.8 V (Li/Li+) or no oxidation peak appears, and in the second solid electrolyte layer 20, a voltage at which a reduction peak appears is -1.0 V (Li/Li+) or more and less than 1.0 V (Li/Li+).

The composite solid electrolyte sheet including both the solid electrolyte layer with excellent oxidation stability and the solid electrolyte layer with excellent reduction stability has a wide range of a potential window, so that it can effectively suppress the deterioration of performance, such as discharge capacity and lifespan maintenance rate, during high-voltage charging of the battery.

## Description

### BACKGROUND

### 1. FIELD

The disclosure and implementations disclosed in this patent document generally relate to a solid electrolyte sheet and an all-solid state battery including the same.

### 2. DESCRIPTION OF THE RELATED ART

Recently, as interest in environmental issues has grown, lithium secondary batteries with high discharge voltage and output stability have been mainly used as power sources for electric vehicles (EVs) that may replace fossil fuel-based vehicles. However, existing lithium secondary batteries employing liquid electrolytes, such as organic solvents, have problems, such as the risk of ignition due to electrolyte leakage, decomposition of electrolyte due to an electrode reaction, and expansion of the battery due thereto. Accordingly, research and development of all-solid state batteries employing all-solid state electrolytes have been actively conducted to solve the aforementioned problems.

### SUMMARY

The present disclosure may be implemented in some embodiments to provide a solid electrolyte sheet having a wide range of a potential window.

The present disclosure may also be implemented in some embodiments to improve the stability of an all-solid state battery to improve lifespan characteristics of the battery.

In some embodiments of the present disclosure, a solid electrolyte sheet includes: a first solid electrolyte layer and a second solid electrolyte layer, respectively including a solid electrolyte, wherein, during LSV analysis according to linear sweep voltammetry, in the first solid electrolyte layer, a voltage at which an oxidation peak appears is higher than 2.8 V (Li/Li+) or no oxidation peak appears, and in the second solid electrolyte layer, a voltage at which a reduction peak appears is -1.0 V (Li/Li+) or more and less than 1.0 V (Li/Li+).

The voltage at which the oxidation peak appears may be a voltage at a point in time at which a linear sweep voltammogram of the first solid electrolyte layer according to LSV analysis intersects a trend line of the solid electrolyte included in the first solid electrolyte layer according to LSV analysis at a specific current density value.

The voltage at which the reduction peak appears may be a voltage at a point at which a linear sweep voltammogram of the second solid electrolyte layer according to LSV analysis intersects a trend line of the solid electrolyte included in the second solid electrolyte layer according to LSV analysis at a specific current density value.

The first solid electrolyte layer may include a first binder, the second solid electrolyte layer includes a second binder, and the first binder and the second binder may be different from each other.

The first binder may include at least one of polyvinylidene fluoride-hexafluoropropylene copolymer (PVDF-co-HFP), polyvinylidene fluoride (PVDF), and nitrile butadiene rubber (NBR).

The second binder may include at least one of butadiene rubber (BR) and styrene-butadiene rubber (SBR).

The solid electrolyte may include a sulfide-based solid electrolyte.

The sulfide-based solid electrolyte may include an argyrodite-based compound represented by Chemical Formula 1 below:

[Chemical Formula 1] Li⁺ₐA⁺_{b}Q_{c}X⁻_{d}

In Chemical Formula 1, 1≤a≤12, 0≤b≤5, 0≤c≤10, 0≤d≤2, A is at least one of P, As, Ge, Ga, Sb, Si, Sn, Al, In, Ti, V, Nb, or Ta, Q is at least one of S, Se, or Te, and X is at least one of Cl, Br, I, F, CN, OCN, SCN, or N₃.

The solid electrolyte sheet may further include: a base layer between the first solid electrolyte layer and the second solid electrolyte layer.

The base layer may include a porous compound having a porosity of 60% or more.

A thickness of the base layer may be 10 to 20 µm.

Thicknesses of the first solid electrolyte layer and the second solid electrolyte layer may each be 10 to 80 µm.

The solid electrolyte sheet may further include: a base layer between the first solid electrolyte layer and the second solid electrolyte layer, wherein the first solid electrolyte layer and the second solid electrolyte layer include a sulfide-based solid electrolyte, the first solid electrolyte layer includes a first binder, the second solid electrolyte layer includes a second binder, and the first binder and the second binder are different from each other.

In some embodiments of the present disclosure, an all-solid state battery includes the solid electrolyte sheet according to the embodiments described above.

The all-solid state battery may further include: a cathode disposed on one surface of the first solid electrolyte layer; and an anode disposed on one surface of the second solid electrolyte layer.

### BRIEF DESCRIPTION OF DRAWINGS

Certain aspects, features, and advantages of the present disclosure are illustrated by the following detailed description with reference to the accompanying drawings.
FIG. 1A is a cross-sectional view conceptually illustrating a structure of a solid electrolyte sheet according to an embodiment.
FIG. 1B is a cross-sectional view conceptually illustrating a structure of a solid electrolyte sheet according to another embodiment.
FIG. 2A is a cross-sectional view conceptually illustrating a structure of an all-solid state battery according to an embodiment.
FIG. 2B is a cross-sectional view conceptually illustrating a structure of an all-solid state battery according to another embodiment.
FIGS. 3A and 3B are diagrams illustrating a method of deriving a trend line for evaluating reduction stability for solid electrolyte sheets according to Reference Examples 1 to 4 (FIG. 3A) and a method of deriving a reduction peak using the trend line (FIG. 3B), respectively.
FIGS. 4A and 4B are diagrams illustrating a method of deriving a trend line for evaluating oxidation stability for solid electrolyte sheets according to Reference Examples 1 to 4 (FIG. 4A) and a method of deriving an oxidation peak using the trend line (FIG. 4B), respectively.
FIGS. 5A and 5B are diagrams illustrating the results of evaluating the oxidation and reduction stability for a solid electrolyte sheet according to an embodiment, respectively.

### DETAILED DESCRIPTION

An all-solid state battery including a solid electrolyte may have superior stability compared to a battery including a liquid electrolyte but may have relatively inferior performances, such as ion conductivity. According to an embodiment, the performance of the solid electrolyte for an electrochemical reaction occurring during an operation of the all-solid state battery may be analyzed and evaluated using a potential window. If a potential window range of the solid electrolyte is narrow, the performances, such as discharge capacity and lifespan characteristics, may deteriorate when the all-solid state battery is charged up to a high voltage.

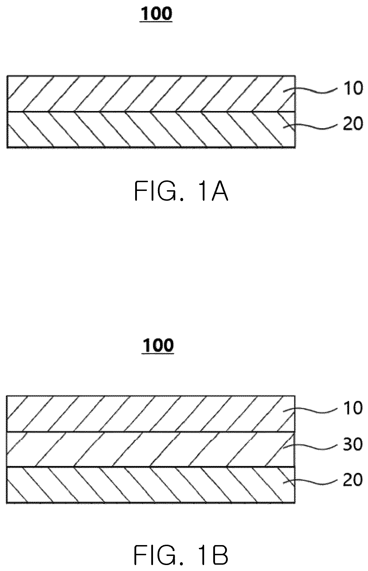

According to an embodiment of the present disclosure, a solid electrolyte having a wide range of a potential window may be manufactured to improve the performances, such as stability and lifespan characteristics, of the all-solid state battery. Hereinafter, embodiments of the present disclosure will be described with reference to FIGS. 1A to 5B.

FIG. 1A is a cross-sectional view conceptually illustrating a structure of a solid electrolyte sheet according to an embodiment.

FIG. 1B is a cross-sectional view conceptually illustrating a structure of a solid electrolyte sheet according to another embodiment.

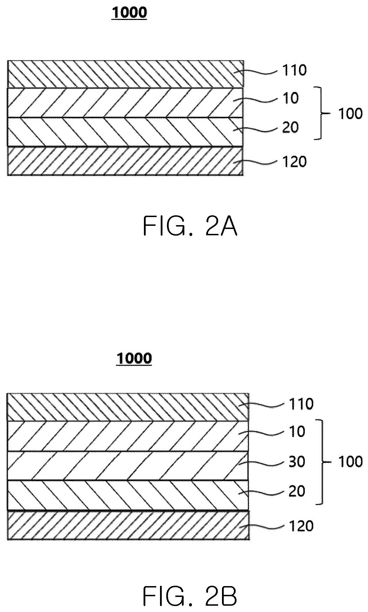

FIG. 2A is a cross-sectional view conceptually illustrating a structure of an all-solid state battery according to an embodiment.

FIG. 2B is a cross-sectional view conceptually illustrating a structure of an all-solid state battery according to another embodiment.

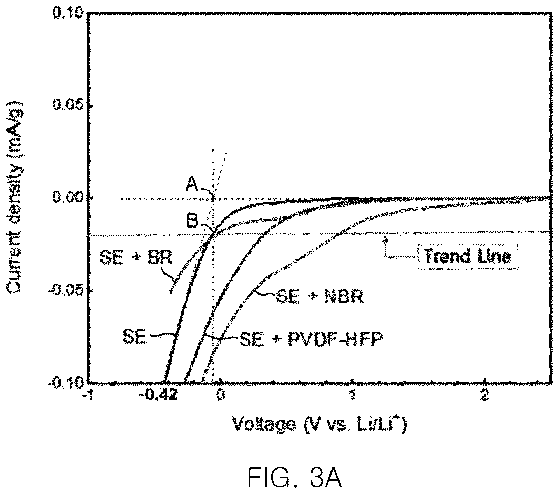

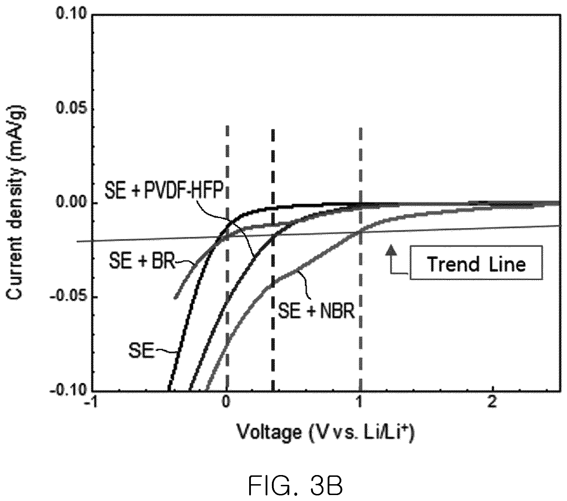

FIGS. 3A and 3B are diagrams illustrating a method of deriving a trend line for evaluating reduction stability for solid electrolyte sheets according to Reference Examples 1 to 4 (FIG. 3A) and a method of deriving a reduction peak using the trend line (FIG. 3B), respectively.

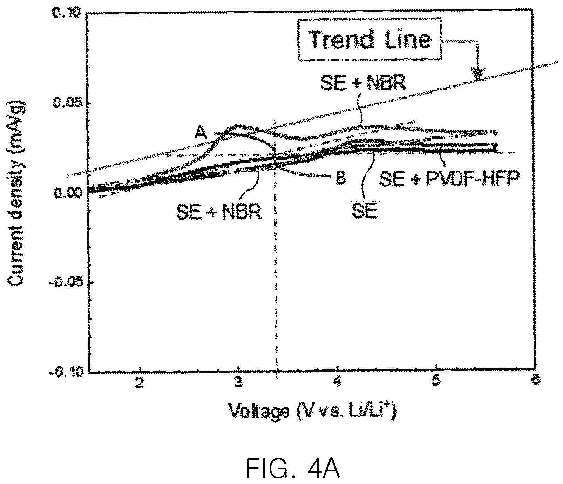

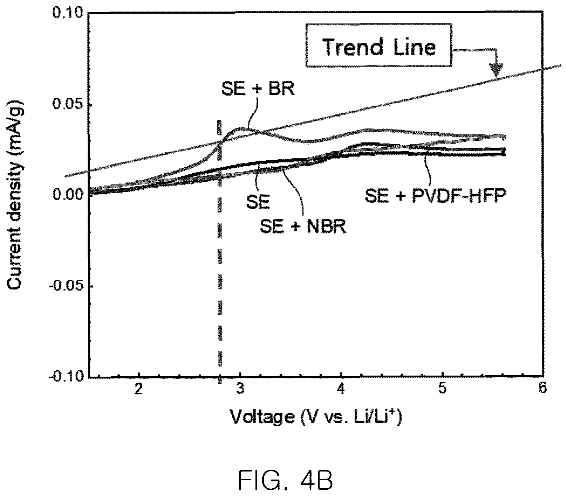

FIGS. 4A and 4B are diagrams illustrating a method of deriving a trend line for evaluating oxidation stability for solid electrolyte sheets according to Reference Examples 1 to 4 (FIG. 4A) and a method of deriving an oxidation peak using the trend line (FIG. 4B), respectively.

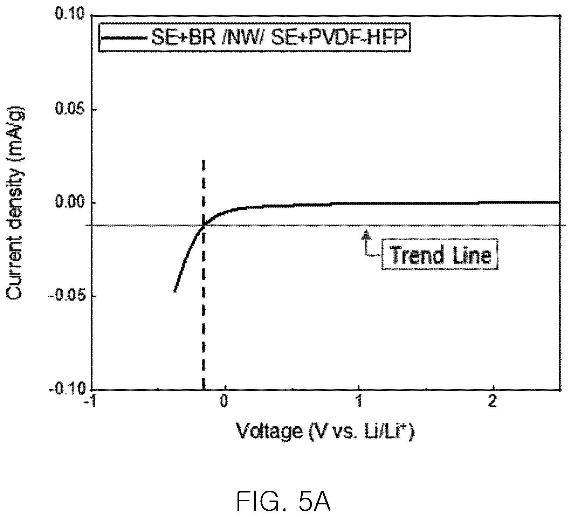

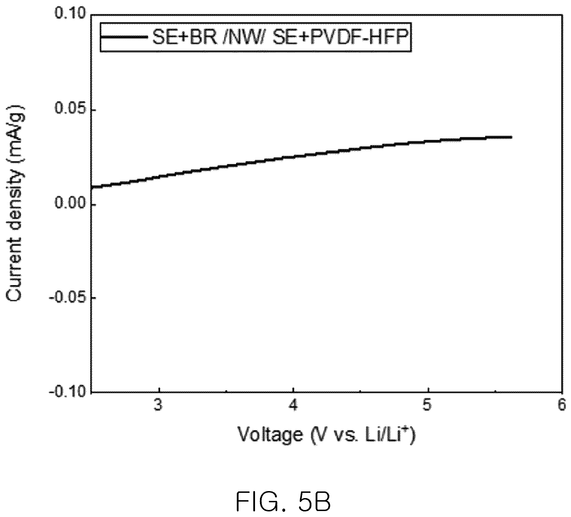

FIGS. 5A and 5B are diagrams illustrating the results of evaluating the oxidation and reduction stability for a solid electrolyte sheet according to an embodiment, respectively.

### Solid electrolyte sheet

A solid electrolyte sheet 100 according to an embodiment includes a first solid electrolyte layer 10 and a second solid electrolyte layer 20, respectively including a solid electrolyte. During LSV analysis according to linear sweep voltammetry, in the first solid electrolyte layer 10, a voltage at which an oxidation peak appears is more than 2.8 V (Li/Li+) or no oxidation peak appears, and in the second solid electrolyte layer 20, a voltage at which a reduction peak appears is -1.0 V (Li/Li+) or more and less than 1.0 V (Li/Li+).

The solid electrolyte sheet 100 may have a relatively wide range of a potential window by including both the first solid electrolyte layer 10 with excellent oxidation stability and the second solid electrolyte layer with excellent reduction stability and may effectively improve the stability, lifespan characteristics, etc. of the all-solid state battery.

According to the charging principle for the secondary battery, a cathode in which an oxidation reaction occurs during a charging process is driven in a relatively high voltage range, and an anode in which a reduction reaction occurs is driven in a relatively low voltage range. Therefore, in order to improve the charging performance of the secondary battery, the cathode component is required to have excellent oxidation stability, and the anode component is required to have excellent reduction stability.

In this regard, the solid electrolyte sheet 100 may improve both the oxidation stability of the cathode and the reduction stability of the anode by including an optimal solid electrolyte taking into account all the characteristics required for the cathode and the anode as different types. Accordingly, the solid electrolyte sheet 100 may have a wide range of a potential window and may improve the charging characteristics, lifespan characteristics, etc. of the all-solid state battery including the solid electrolyte sheet 100 to an excellent level.

The first solid electrolyte layer 10 having excellent oxidation stability may be a solid electrolyte layer adjacent to a cathode 110 in an all-solid state battery 1000, and the second solid electrolyte layer 20 having excellent reduction stability may be a solid electrolyte layer adjacent to an anode 120 in the all-solid state battery 1000.

The first solid electrolyte layer 10 may be a solid electrolyte layer in which a voltage at which an oxidation peak appears is greater than 2.8 V (Li/Li+) or no oxidation peak appears in an LSV analysis according to linear sweep voltammetry.

In some implementations, if the oxidation peak is not confirmed up to the upper limit (for example, 5.62 V (Li/Li+)) of the voltage range during the LSV analysis, it may be determined that the oxidation peak does not appear. If the voltage at which the oxidation peak appears is 2.8 V (Li/Li+) or lower, it may be determined that the oxidation stability of the solid electrolyte layer is low. In addition, if the oxidation peak does not appear, it may be determined that the oxidation stability of the solid electrolyte layer is very good. Therefore, when the LSV analysis result of the first solid electrolyte layer 10 is as described above, the oxidation stability may be very good.

The second solid electrolyte layer 20 may be a solid electrolyte layer in which a voltage at which a reduction peak appears is -1.0 V (Li/Li+) or more and less than 1.0 V (Li/Li+) in an LSV analysis according to linear sweep voltammetry. In some implementation examples, in the second solid electrolyte layer 20 a voltage at which a reduction peak appears may be -0.4 V (Li/Li+) or more or 0 V (Li/Li+) or more and 0.4 V (Li/Li+) or less in an LSV analysis according to linear sweep voltammetry.

If the voltage at which the reduction peak appears is 1.0 V (Li/Li+) or more, it may be determined that the reduction stability of the solid electrolyte layer is low. In addition, as the voltage at which the reduction peak appears is close to 0 V, the reduction stability of the solid electrolyte layer may be determined to be better. Therefore, when the LSV analysis result of the second solid electrolyte layer 20 is as described above, the reduction stability may be very good.

The voltage at which the oxidation peak and reduction peak appear may be a voltage value measured based on Li/Li+ during the LSV analysis. Specifically, the voltage at which the oxidation peak and reduction peak appear may be a voltage value measured by connecting a pressed cell including the solid electrolyte layer to a potentiostat, maintaining a rest state for 4 hours, and then performing LSV analysis at a scan rate of 1 mV/s. At this time, a lower limit of the voltage range may be -0.38 V (Li/Li+), and an upper limit may be 5.62 V (Li/Li+).

In some implementations, the voltage at which the oxidation peak and reduction peak appear may refer to i) a voltage at a point at which the slope of a curve changes the most in a linear sweep voltammogram according to LSV analysis or ii) a voltage at a point at which the curve intersects the trend line of a reference material. In this case, the reference material may be a solid electrolyte included in the solid electrolyte layer.

For example, the voltage at which the oxidation peak appears may be a voltage at a point at which a linear sweep voltammogram of the first solid electrolyte layer 10 according to LSV analysis intersects a trend line of the solid electrolyte included in the first solid electrolyte layer 10 according to LSV analysis at a specific current density value.

In addition, the voltage at which the reduction peak appears may be a voltage at a point at which a linear sweep voltammogram of the second solid electrolyte layer 20 according to LSV analysis intersects a trend line of the solid electrolyte included in the second solid electrolyte layer 20 according to LSV analysis at a specific current density value.

Hereinafter, the trend line will be specifically described with reference to FIGS. 3A and 4A.

The trend line related to the reduction peak may be derived from the linear sweep voltammogram (Reference Example 1) of the solid electrolyte according to the LSV analysis in the following manner (see FIG. 3A).
- i) A point (A) at which a tangent line contacting the curve at a point (-0.42 V (Li/Li+) in FIG. 3A) at which the curve meets the X-axis and a tangent line contacting the curve at a point (2V(Li/Li⁺ in FIG. 3A) in a steady state in which the current value of the curve is constantly maintained intersect each other is derived.
- A point (B) at which a straight line passing through the intersection point (A) derived as described above and perpendicular to the X-axis (voltage) intersects the above curve is derived.
- A straight line having a Y-intercept corresponding to the Y-axis value of the point B and having the same slope as the tangent line according to ii) is derived as a trend line.

A voltage at the point at which the trend line derived as described above intersects the linear sweep voltammogram of the solid electrolyte layer according to LSV analysis may be the voltage at which the reduction peak of the solid electrolyte layer appears (see FIG. 3B).

The trend line related to the oxidation peak may be derived from the linear sweep voltammogram (Reference Example 1) of the solid electrolyte according to the LSV analysis in the following manner (see FIG. 4A).
- i) A point (A) at which a tangent line contacting the curve at a point (2 V (Li/Li+) in FIG. 4A) corresponding to an inflection point of the curve and a tangent line contacting the curve at a point (4 V (Li/Li+) in FIG. 4A) in a steady state in which the current value of the curve is constantly maintained intersect each other is derived.
- A point (B) at which a straight line passing through the intersection point (A) derived as described above and perpendicular to the X-axis (voltage) intersects the above curve is derived.
- A straight line having a Y-intercept corresponding to the Y-axis value of the point B and having the same slope as the tangent line according to i) is derived as a trend line.

The voltage at the point at which the trend line derived as described above and the linear sweep voltammogram of the solid electrolyte layer according to the LSV analysis intersect may be the voltage at which the oxidation peak of the solid electrolyte layer appears (see FIG. 4B). If there is no point at which linear sweep voltammogram of the solid electrolyte layer intersects the trend line derived as described above, it may be determined that an oxidation peak does not appear.

The first solid electrolyte layer 10 may include a first binder, and the second solid electrolyte layer 20 may include a second binder. When the solid electrolyte layers include binders, respectively, the components included in the solid electrolyte layers may be excellently bound and the adhesion to a current collector or electrode may be improved. The first binder and the second binder may be different from each other. Specifically, the first binder included in the first solid electrolyte layer 10 may be different from the second binder included in the second solid electrolyte layer 20.

In the case of using one type of binder in manufacturing a wet solid electrolyte, the range of the potential window in which the solid electrolyte is stably driven may be formed to be narrow. Meanwhile, the solid electrolyte sheet 100 according to an embodiment may include the solid electrolytes including different types of binders, thereby forming a wide range of the potential window in which the solid electrolytes are stably driven and further improving the stability of the all-solid state battery.

The first binder may be a binder relatively suitable as a cathode component. Specifically, the first binder may include at least one of polyvinylidene fluoride-hexafluoropropylene copolymer (PVDF-co-HFP), polyvinylidene fluoride (PVDF), and nitrile butadiene rubber (NBR). When the type of the first binder is as described above, the oxidation stability of the first solid electrolyte layer 10 including the first binder may be further improved and the adhesion to the cathode 110 may be improved.

The second binder may be a binder that is relatively suitable as an anode component. Specifically, the second binder may include at least one of butadiene rubber BR and styrene-butadiene rubber (SBR). According to an embodiment, the second binder may include butadiene rubber (Nd-BR) synthesized by a neodymium catalyst. When the type of the second binder is as described above, the reduction stability of the second solid electrolyte layer 20 including the second binder may be further improved and the adhesion to the anode 120 may be improved.

A weight ratio of the solid electrolyte and the first binder included in the first solid electrolyte layer 10 and a weight ratio of the solid electrolyte and the second binder included in the second solid electrolyte layer 20 may each be 90:10 to 99.9:0.1. For example, the weight ratio of the solid electrolyte and the first binder included in the first solid electrolyte layer 10 and the weight ratio of the solid electrolyte and the second binder included in the second solid electrolyte layer 20 may each be 95:5 to 99:1. When the weight ratio of the solid electrolyte and the binder included in the solid electrolyte layer is within the aforementioned range, the ion conductivity, adhesiveness, etc. of the solid electrolyte layer may all be secured at excellent levels.

The first solid electrolyte layer and the second solid electrolyte layer may include a sulfide-based solid electrolyte. When only one type of binder is used in the wet manufacturing of the sulfide-based solid electrolyte, the range of the potential window in which the finally manufactured sulfide-based solid electrolyte is stably driven may be formed to be very narrow. Therefore, when the solid electrolyte sheet 100 having the characteristics according to the aforementioned embodiments includes a sulfide-based solid electrolyte, a sulfide-based solid electrolyte having a relatively wide range of the potential window may be formed, thereby providing a sulfide-based all-solid state battery having excellent performance.

The sulfide-based solid electrolyte may include Thio-LISICON, β-Li₃PS₄, Li₇P₃S₁₁, Li₂S-P₂S₅, LGPS, an argyrodite-based compound, etc., but the sulfide-based solid electrolyte according to an embodiment may include an argyrodite-based compound represented by Chemical Formula 1.

[Chemical Formula 1] Li⁺ₐA⁺_{b}Q_{c}X⁻_{d}

In Chemical Formula 1, 1≤a≤12, 0≤b≤5, 0≤c≤10, 0≤d≤2, A is at least one of P, As, Ge, Ga, Sb, Si, Sn, Al, In, Ti, V, Nb, or Ta, Q is at least one of S, Se, or Te, and X is at least one of Cl, Br, I, F, CN, OCN, SCN, or N₃.

Specifically, the argyrodite-based compound may be a compound represented by a chemical formula of Li₇₋ₓPS₆₋ₓClₓ (0≤x≤2), Li₇₋ₓPS₆₋ₓBrₓ (0≤x≤2), or Li₇₋ₓPS₆₋ₓIₓ (0≤x≤2). More specifically, the argyrodite-based compound may be a compound represented by a chemical formula of Li₆PS₅Cl, Li₆PS₅Br, Li₆PS₅I, Li_{6.5}Sb_{0.5}Ge_{0.5}S₅I, Li_{5.7}PS_{4.7}Cl_{1.3}, or Li_{6.6}Sb_{0.5}Si_{0.6}S₅I.

The solid electrolyte sheet 100 according to an embodiment may further include a base layer 30 between the first solid electrolyte layer 10 and the second solid electrolyte layer 20. That is, the solid electrolyte sheet 100 may have a structure including the first solid electrolyte layer 10 and the second solid electrolyte layer 20 and may have a structure not including the base layer 30 between the first solid electrolyte layer 10 and the second solid electrolyte layer 20 (see FIG. 1A) or may have a structure further including the base layer 30 (see FIG. 1B).

If the solid electrolyte sheet 100 further includes the base layer 30 between the first solid electrolyte layer 10 and the second solid electrolyte layer 20, direct contact between the solid electrolyte layers having different characteristics may be prevented, thereby suppressing side reactions at the interface, and the durability, energy density, etc. of the solid electrolyte sheet 100 and the all-solid state battery including the solid electrolyte sheet 100 may be further improved. In addition, as the thickness of the solid electrolyte layer decreases, the risk of an internal short-circuit of the battery may increase, but when the solid electrolyte sheet 100 further includes the base layer 30, the strength of the solid electrolyte sheet may be increased, thereby reducing the risk of internal short-circuit.

The thickness of the base layer 30 is not particularly limited, but may be 10 to 20 µm, for example. If the base layer 30 is too thin, it may be difficult to control the base layer 30 and the strength of the base layer 30 may be weak so the base layer 30 may be torn frequently. Meanwhile, if the base layer 30 is too thick, ions may be difficult to transmit through the base layer.

The base layer 30 may include a porous compound having a porosity of 60% or more. Specifically, the porosity of the porous compound may be 70% or more and 99% or less. When the base layer 30 includes a porous compound having a high porosity as described above, the base layer may excellently include a solid electrolyte.

The type of the porous compound is not particularly limited as long as porous compound satisfies the porosity characteristics described above, and for example, polyolefin compounds, such as polyethylene (PE) and polypropylene (PP), nonwoven fabrics, polyethylene terephthalate (PET), etc. may be appropriately used. The base layer 30 may have a single-layer structure or a multilayer structure. For example, when the base layer 30 includes a polyolefin compound, a structure of the base layer 30 may be selected from the group consisting of a polyethylene single film, a polypropylene single film, a polyethylene/polypropylene double film, a polypropylene/polyethylene/polypropylene triple film, and a polyethylene/polypropylene/polyethylene triple film, but is not limited thereto.

A thickness of the first solid electrolyte layer 10 and the second solid electrolyte layer 20 may each be 10 to 80 µm. If the solid electrolyte layer is too thin, the risk of a short-circuit occurring inside the battery may increase. Meanwhile, if the solid electrolyte layer is too thick, it may be difficult to secure the energy density of the battery.

According to an embodiment, the solid electrolyte sheet 100 includes the first solid electrolyte layer 10 and the second solid electrolyte layer 20, respectively including a solid electrolyte, and in the first solid electrolyte layer 10, a voltage at which an oxidation peak appears is more than 2.8 V (Li/Li+) or no oxidation peak appears in LSV analysis according to linear sweep voltammetry, and in the second solid electrolyte layer 20, a voltage at which a reduction peak appears is -1.0 V (Li/Li+) or more and less than 1.0 V (Li/Li+) in LSV analysis according to linear sweep voltammetry. The solid electrolyte sheet 100 may further include the base layer 30 between the first solid electrolyte layer 10 and the second solid electrolyte layer 20, the first solid electrolyte layer 10 and the second solid electrolyte layer 20 may include a sulfide-based solid electrolyte, the first solid electrolyte layer 10 may include a first binder, the second solid electrolyte layer 20 may include a second binder, and the first binder and the second binder may be different from each other.

The method of manufacturing the solid electrolyte sheet 100 is not particularly limited. For example, when the solid electrolyte sheet 100 has a structure including the first solid electrolyte layer 10 and the second solid electrolyte layer 20 and further including the base layer 30 positioned therebetween (see FIG. 1B), the solid electrolyte sheet 100 may be manufactured by casting a first solid electrolyte slurry and a second solid electrolyte slurry on one surface and the other surface of the base layer, respectively, and drying the same at 60 to 100°C. The solid electrolyte slurry may be manufactured by mixing the solid electrolyte with an organic solvent, such as N-butylbenzene (NBB), and the slurry may further include a binder.

The method of casting the first solid electrolyte slurry and the second solid electrolyte slurry on one surface and the other surface of the base layer, respectively, is not particularly limited, and for example, it may be performed using a doctor blade method. In addition, the order of casting is also not particularly limited, and one slurry may be cast first and the other slurry may be cast, or the both slurries may be cast simultaneously.

### All-solid state battery

The all-solid state battery 1000 according to an embodiment includes the solid electrolyte sheet 100 according to any one of the aforementioned embodiments. Specifically, the all-solid state battery 1000 may include a cathode, an anode, and the solid electrolyte sheet 100 positioned therebetween. More specifically, the all-solid state battery 1000 may further include the cathode 110 disposed on one surface of the first solid electrolyte layer 10 and the anode 120 disposed on one surface of the second solid electrolyte layer 20. When the all-solid state battery 1000 has the structure described above, the stability, lifespan characteristics, etc. of the battery may be very excellent by appropriately including the first solid electrolyte layer 10 with excellent oxidation stability and the second solid electrolyte layer 20 with excellent reduction stability. Details of the solid electrolyte sheet 100, etc., are given above, and thus, a detailed description thereof is omitted.

The cathode is not particularly limited as long as it is commonly used in a secondary battery, and may include, for example, a cathode current collector; and a cathode mixture layer formed on at least one surface of the cathode current collector.

The components of the cathode current collector are not particularly limited, and may include indium (In), copper (Cu), magnesium (Mg), stainless steel, titanium (Ti), iron (Fe), cobalt (Co), nickel (Ni), a plate or foil formed of zinc (Zn), aluminum (Al), germanium (Ge), lithium (Li), or alloys thereof.

A cathode active material included in the cathode mixture layer is not particularly limited. For example, the cathode mixture layer may include a lithium-transition metal oxide as the cathode active material, and may include, for example, a lithium-transition metal oxide, such as lithium cobalt oxide (LiCoO₂), lithium manganese oxide (LiMn₂O₄), or lithium nickel oxide (LiNiO₂), or a lithium-transition metal composite oxide in which a portion of the transition metals is substituted with other transition metals. Specifically, the cathode active material may be an NCM-based cathode active material represented by Chemical Formula 2 below or an LLO (Li rich layered oxides, Over Lithiated Oxides, Over-lithiated layered oxide, OLO, LLOs)-based cathode active material represented by Chemical Formula 3 below.

[Chemical Formula 2] LiₐNi_{b}M_{1.3}O₂

In Chemical Formula 2, 0.9≤a≤1.2, b≥0.5, and M is at least one of Na, Mg, Ca, Y, Ti, Hf, V, Nb, Ta, Cr, Mo, W, Mn, Co, Fe, Cu, Ag, Zn, B, Al, Ga, C, Si, Sn, Ba, and Zr.

Specifically, in Chemical Formula 2, 0.95≤a≤1.08 may be satisfied, and b may be 0.6 or more, 0.8 or more, greater than 0.8, 0.9 or more, or 0.98 or more.

Specifically, in Chemical Formula 2, M may include Co, Mn, or Al, and more specifically, M may include Co and Mn, and optionally further include Al.

[Chemical Formula 3] Li₁₊ₓM₁₋ₓO₂

In Chemical Formula 3, 0≤x≤0.4, and M is at least one of Na, Mg, Ca, Y, Ti, Hf, V, Nb, Ta, Cr, Mo, W, Ni, Mn, Co, Fe, Cu, Ag, Zn, B, Al, Ga, C, Si, Sn, Ba, and Zr.

Specifically, in Chemical Formula 3, M may include Ni, Co, Mn, or Al, and more specifically, may include Ni, Co, and Mn, and optionally further include Al.

In addition, the cathode active material may be a lithium iron phosphate (LFP)-based cathode active material represented by the chemical formula of LiFePO₄.

In addition, the lithium-transition metal oxide may be a secondary particle formed by assembling or agglomerating a plurality of primary particles into a substantially single particle or may be in the form of a single particle. The single particle form may refer to, for example, excluding secondary particles formed by assembling or agglomerating a plurality of primary particles (for example, more than 10) into a substantially single particle. However, the single particle form does not exclude single particles in the range of 2 to 10 being attached or adhered to each other to form a single body. In some embodiments, the cathode active material may include both a secondary particle form and a single particle form.

The cathode mixture layer may further include a binder. The binder may include, for example, one or more types of polyvinylidene fluoride, styrene butadiene rubber (SBR), polytetrafluoroethylene, polyvinylidene fluoride, vinylidene fluoride-hexafluoropropylene copolymer, polyacrylonitrile, and polymethyl methacrylate.

The cathode mixture layer may further include a conductive material. The conductive material may include, for example, one or more types of graphite, such as natural graphite or artificial graphite; carbon-based material, such as carbon black, acetylene black, Ketjen black, channel black, furnace black, lamp black, summer black, carbon fiber, carbon nanotube (CNT), and the like; metal powder or metal fiber, such as copper, nickel, aluminum, and silver; conductive whiskers, such as zinc oxide or potassium titanate; conductive metal oxide, such as titanium oxide; or conductive polymer, such as a polyphenylene derivative.

The anode is not particularly limited as long as it is commonly used in a secondary battery, and for example, the anode may include an anode current collector; and an anode mixture layer formed on at least one surface of the anode current collector.

The components of the anode current collector are not particularly limited, and a plate or foil formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or alloys thereof may be used.

The anode mixture layer may include a carbon-based active material, such as artificial graphite or natural graphite, a silicon-based active material, such as silicon oxide (SiOx; 0<x<2), a SiC composite, or a metal, such as lithium metal as an anode active material.

The anode mixture layer may further include a binder. The binder may include, for example, one or more types of styrene butadiene rubber (SBR), polytetrafluoroethylene, polyvinylidene fluoride, polyethylene, vinylidene fluoride/hexafluoropropylene copolymer, polyacrylonitrile, polymethyl methacrylate, etc.

The anode mixture layer may further include a conductive material. The conductive material may include, for example, one or more types of graphite, such as natural graphite or artificial graphite; carbon-based material, such as carbon black, acetylene black, Ketjen black, channel black, furnace black, lamp black, summer black, carbon fiber, carbon nanotube (CNT), etc.; metal powder or metal fiber, such as copper, nickel, aluminum, silver, etc.; conductive whiskers, such as zinc oxide or potassium titanate; conductive metal oxide, such as titanium oxide; or conductive polymer, such as polyphenylene derivative, etc.

### Example

### 1. Reference Example 1

100 mg of an argyrodite compound (LPSCl), which is a sulfide-based solid electrolyte represented by the chemical formula of Li₇₋ₓPS₆₋ₓClₓ (0≤x≤2), was introduced to a pressure cell having a 10 mm diameter and pressed at a pressure of 350 MPa to manufacture a pressure cell including a solid electrolyte sheet of Reference Example 1 that does not include a separate binder. At this time, an indium metal (In metal) having a diameter of 9 mm and a thickness of 200 µm and stainless steel (Steel Use Stainless; SUS) current collector having a thickness of 10 µm were disposed on one surface of the solid electrolyte sheet, and only stainless steel (Steel Use Stainless; SUS) current collector having a thickness of 10 µm was disposed on the other surface of the solid electrolyte sheet, and the pressure cell was restrained with a pressure of 50 kgf·cm torque.

Thereafter, in order to perform LSV analysis (LSV Test) according to linear sweep voltammetry, the pressure cell was connected to a potentiostat from potential Biologic, Inc., and stabilized by maintaining a rest state for 4 hours, and then, the LSV Test was performed at a scan speed of 1 mV/s to evaluate the oxidation and reduction stability of the solid electrolyte sheet (see FIGS. 3A to 4B).

At this time, a lower limit of the voltage range for evaluating reduction stability and an upper limit of the voltage range for evaluating oxidation stability during LSV analysis were set to -0.38 V (Li/Li+) and 5.62 V (Li/Li+), respectively, and the current value generated in the corresponding voltage range was measured.

Meanwhile, when evaluating the reduction stability of the solid electrolyte sheet of Reference Example 1, a voltage at which a reduction peak appears was measured as a voltage at a point at which a linear sweep voltammogram of the solid electrolyte sheet according to the LSV analysis intersects the trend line according to the LSV analysis of the solid electrolyte included in the solid electrolyte sheet.

The results of evaluating the reduction stability of the solid electrolyte sheet of Reference Example 1 are as shown in Table 1 below. Specifically, the derivation of the trend line and the voltage measurement were conducted in the following manner (see FIGS. 3A and 3B).
- i) A point (A) at which a tangent line contacting the curve at a point (-0.42 V (Li/Li+) in FIG. 3A) at which the curve meets the X-axis and a tangent line contacting the curve at a point (2V(Li/Li⁺ in FIG. 3A) in a steady state in which the current value of the curve is constantly maintained intersect each other was derived.
- A point (B) at which a straight line passing through the intersection point (A) derived as described above and perpendicular to the X-axis (voltage) intersects the above curve was derived.
- A straight line having a Y-intercept corresponding to the Y-axis value of the point B and having the same slope as the tangent line according to ii) was derived as a trend line.

A voltage at the point at which the trend line derived as described above intersects the linear sweep voltammogram of the solid electrolyte layer according to LSV analysis may was measured as the voltage at which the reduction peak of the solid electrolyte layer appears (see FIG. 3B).

In addition, when evaluating the oxidation stability of the solid electrolyte sheet of Reference Example 1, a voltage at which an oxidation peak appears was measured as a voltage at a point at which the linear sweep voltammogram of the solid electrolyte sheet according to the LSV analysis intersects the trend line according to the LSV analysis of the solid electrolyte included in the solid electrolyte sheet. Specifically, the derivation of the trend line and the voltage measurement were conducted in the following manner (see FIGS. 4A and 4B).
i) A point (A) at which a tangent line contacting the curve at a point (2 V (Li/Li+) in FIG. 4A) corresponding to an inflection point of the curve and a tangent line contacting the curve at a point (4 V (Li/Li+) in FIG. 4A) in a steady state in which the current value of the curve is constantly maintained intersect each other was derived.
   - A point (B) at which a straight line passing through the intersection point (A) derived as described above and perpendicular to the X-axis (voltage) intersects the above curve was derived.
   - A straight line having a Y-intercept corresponding to the Y-axis value of the point B and having the same slope as the tangent line according to i) was derived as a trend line.

The voltage at the point at which the trend line derived as described above and the linear sweep voltammogram of the solid electrolyte layer according to the LSV analysis intersect was measured as the voltage at which the oxidation peak of the solid electrolyte layer appears (see FIG. 4B). If there was no point at which linear sweep voltammogram of the solid electrolyte layer intersected the trend line derived as described above, it was determined that an oxidation peak did not appear. The evaluation of oxidation stability of the solid electrolyte sheet of Reference Example 1 is as shown in Table 1 below.

### 2. Reference Examples 2 to 4

### 1) Reference Example 2

An argyrodite compound (LPSCl), which is a sulfide-based solid electrolyte, represented by the chemical formula of Li₇₋ₓPS₆₋ₓClₓ (0≤x≤2) and a nitrile-butadiene rubber (NBR) binder were mixed with an organic solvent (N-Butylbenzene; NBB) using a Thinky mixer to prepare a solid electrolyte slurry including LPSCl and NBR in a weight ratio of 97:3. Thereafter, it was casted on a stainless steel (Steel Use Stainless; SUS) foil with a 150-µm doctor blade, on which vacuum drying was performed at 80°C to manufacture the solid electrolyte sheet of Reference Example 2 including the NBR binder.

100 mg of the solid electrolyte sheet manufactured as described above was introduced to a pressure cell having a diameter of 10 mm and pressed at a pressure of 350 MPa to manufacture a pressure cell including the solid electrolyte sheet of Reference Example 2 including an NBR binder, and an LSV test was performed on the pressure cell (see FIGS. 3A to 4B). At this time, the specific pressure cell manufacturing process, LSV Test conditions, etc. were applied in the same manner as those in Reference Example 1.

Meanwhile, the oxidation and reduction stability of the solid electrolyte sheet of Reference Example 2 were evaluated in the same manner as in Reference Example 1, and the results are as shown in Table 1 below.

### 2) Reference Examples 3 and 4

A pressure cell including a solid electrolyte sheet of Reference Example 3 was manufactured in the same manner as Reference Example 2, but using polyvinylidene fluoride-hexafluoropropylene copolymer (PVDF-co-HFP) as a binder, and an LSV test was performed (see FIGS. 3A and 3B). In addition, a pressure cell including a solid electrolyte sheet of Reference Example 4 was manufactured in the same manner as Reference Example 2, but using butadiene rubber (Nd-BR) synthesized by a neodymium catalyst as a binder, and an LSV Test was performed (see FIGS. 3A to 4B).

Meanwhile, the oxidation and reduction stability of the solid electrolyte sheets of Reference Examples 3 and 4 were evaluated in the same manner as Reference Example 1, and the results are shown in Table 1 below.

**[Table 1]**

| | Reduction peak | Reduction stability | Oxidation peak | Oxidation stability |
|---|---|---|---|---|
| Reference example 1 (SE) | 0V (Li/Li⁺) | Very good | X | Very good |
| Reference example 2 (SE+NBR) | 1.0V (Li/Li⁺) | low | X | Very good |
| Reference example 3 (SE+PVDF-HFP) | 0.4V (Li/Li⁺) | Good | X | Very good |
| Reference example 4 (SE+BR) | 0V (Li/Li⁺) | Very good | 2.8V | low |

Referring to Table 1 above, the bare-type solid electrolyte sheet of Reference Example 1 (SE) without a binder does not show an oxidation peak according to LSV analysis, and the voltage at which the reduction peak appears is 0 V (Li/Li+), confirming that the oxidation stability and reduction stability are very good.

Meanwhile, the solid electrolyte layer sheet of Reference Example 2 (SE+NBR) including the nitrile-butadiene rubber (NBR) binder does not show an oxidation peak according to LSV analysis, confirming that the oxidation stability is very good, but the voltage at which the reduction peak appears is 1.0 V, confirming that the reduction stability is relatively low.

In addition, the solid electrolyte sheet of Reference Example 3 (SE+PVDF-HFP) including polyvinylidene fluoride-hexafluoropropylene copolymer (PVDF-co-HFP) as a binder shows very good oxidation stability as no voltage at which an oxidation peak appears according to LSV analysis was observed, and the voltage at which a reduction peak appears was 0.4 V (Li/Li+), confirming that the reduction stability was good.

Finally, the solid electrolyte sheet of Reference Example 4 (SE+BR) including butadiene rubber (Nd-BR) synthesized by a neodymium catalyst as a binder shows very good reduction stability as the voltage at which a reduction peak appears was 0 V (Li/Li+), but the voltage at which an oxidation peak appears was 2.8 V (Li/Li+), confirming that the oxidation stability is low.

Considering these results, it is determined that the oxidation/reduction stability of the solid electrolyte sheets may vary significantly depending on the types of binders added.

### 3. Example

### 1) Manufacturing of solid electrolyte sheet

An argyrodite-based compound (LPSCl), which is sulfide-based solid electrolyte, represented by the chemical formula of Li₇₋ₓPS₆₋ₓClₓ (0≤x≤2), and a polyvinylidene fluoride-hexafluoropropylene copolymer (PVDF-co-HFP) binder were mixed with an organic solvent (N-Butylbenzene; NBB) using a Thinky mixer to prepare a slurry for the first solid electrolyte layer including LPSCl and PVDF-co-HFP in a weight ratio of 97:3. Thereafter, the prepared slurry for the first solid electrolyte layer was cast on one surface of a nonwoven fabric (NW), which is a base layer, using a 150-µm doctor blade.

In addition, an argyrodite compound (LPSCl), which is sulfide-based solid electrolyte, represented by the chemical formula of Li₇₋ₓPS₆₋ₓClₓ (0≤x≤2), and a butadiene rubber BR binder (Nd-BR) were mixed with an organic solvent (N-Butylbenzene; NBB) using a Thinky mixer to prepare a slurry for the second solid electrolyte layer including LPSCl and Nd-BR in a weight ratio of 97:3. Thereafter, the prepared slurry for the second solid electrolyte layer was cast on the other surface of the nonwoven fabric (NW) with a 200-µm doctor blade, and vacuum drying was performed at 80° C on the nonwoven fabric (NW) on which the first solid electrolyte layer slurry and the second solid electrolyte layer slurry were each cast, thereby manufacturing a solid electrolyte sheet of an example in which a first solid electrolyte layer including a PVDF-co-HFP binder; and a second solid electrolyte layer including a Nd-BR binder were formed on both surfaces of the nonwoven fabric (NW) as a base layer.

### 2) Evaluation of solid electrolyte sheet

100 mg of the solid electrolyte sheet manufactured as described above was introduced to a pressure cell having a diameter of 10 mm and pressed at a pressure of 350 MPa to manufacture a pressure cell including the solid electrolyte sheet of the example, and LSV analysis was performed on the pressure cell (see FIGS. 5A and 5B). Specifically, the oxidation and reduction stability of the pressure cell including the solid electrolyte sheet of the example were evaluated in the same manner as in Reference Example 1, and the results are as shown in Table 2 below.

**[Table 2]**

| | Reduction peak | Reduction stability | Oxidation peak | Oxidation stability |
|---|---|---|---|---|
| Example (SE+BR/NW/SE+PVDF-HFP) | -0.2V (Li/Li⁺) | Very good | X | Very good |

Referring to Table 2 above, it can be confirmed that the solid electrolyte sheet of the embodiment has excellent oxidation stability and reduction stability as the oxidation peak does not appear according to the LSV analysis and the voltage at which the reduction peak appears is -0.2 V (Li/Li+).

The present disclosure relates also to the following numbered aspects:
Aspect 1) a solid electrolyte sheet may include: a first solid electrolyte layer and a second solid electrolyte layer, respectively including a solid electrolyte, wherein, during LSV analysis according to linear sweep voltammetry, in the first solid electrolyte layer, a voltage at which an oxidation peak appears is higher than 2.8 V (Li/Li+) or no oxidation peak appears, and in the second solid electrolyte layer, a voltage at which a reduction peak appears is -1.0 V (Li/Li+) or more and less than 1.0 V (Li/Li+).
Aspect 2) The solid electrolyte sheet of aspect 1, wherein the voltage at which the oxidation peak appears is a voltage at a point at which a linear sweep voltammogram of the first solid electrolyte layer according to LSV analysis intersects a trend line of the solid electrolyte included in the first solid electrolyte layer according to LSV analysis at a specific current density value.
Aspect 3) The solid electrolyte sheet of aspect 1 or 2, wherein the voltage at which the reduction peak appears is a voltage at a point at which a linear sweep voltammogram of the second solid electrolyte layer according to LSV analysis intersects a trend line of the solid electrolyte included in the second solid electrolyte layer according to LSV analysis at a specific current density value.
Aspect 4) The solid electrolyte sheet of anyone of aspects 1 to 3, wherein the first solid electrolyte layer includes a first binder, the second solid electrolyte layer includes a second binder, and the first binder and the second binder are different from each other.
Aspect 5) The solid electrolyte sheet of aspect 4, wherein the first binder includes at least one of polyvinylidene fluoride-hexafluoropropylene copolymer (PVDF-co-HFP), polyvinylidene fluoride (PVDF), and nitrile butadiene rubber (NBR).
Aspect 6) The solid electrolyte sheet of aspects 4 or 5, wherein the second binder includes at least one of butadiene rubber (BR) and styrene-butadiene rubber (SBR).
Aspect 7) The solid electrolyte sheet of anyone of aspects 1 to 6, wherein the solid electrolyte includes a sulfide-based solid electrolyte.
Aspect 8) The solid electrolyte sheet of aspect 7, wherein the sulfide-based solid electrolyte includes an argyrodite-based compound represented by Chemical Formula 1 below:

   [Chemical Formula 1] Li⁺ₐA⁺_{b}Q_{c}X⁻_{d}

   where 1≤a≤12, 0≤b≤5, 0≤c≤10, 0≤d≤2, A is at least one of P, As, Ge, Ga, Sb, Si, Sn, Al, In, Ti, V, Nb, or Ta, Q is at least one of S, Se, or Te, and X is at least one of Cl, Br, I, F, CN, OCN, SCN, or N3.
Aspect 9) The solid electrolyte sheet of anyone of aspects 1 to 8, further comprising a base layer between the first solid electrolyte layer and the second solid electrolyte layer.
Aspect 10) The solid electrolyte sheet of aspect 9, wherein the base layer includes a porous compound having a porosity of 60% or more.
Aspect 11) The solid electrolyte sheet of aspect 9 or 10, wherein a thickness of the base layer is 10 to 20 µm.
Aspect 12) The solid electrolyte sheet of anyone of aspects 1 to 11, wherein thicknesses of the first solid electrolyte layer and the second solid electrolyte layer are each 10 to 80 µm.
Aspect 13) The solid electrolyte sheet of aspect 1, further comprising: a base layer between the first solid electrolyte layer and the second solid electrolyte layer, wherein the first solid electrolyte layer and the second solid electrolyte layer include a sulfide-based solid electrolyte, the first solid electrolyte layer includes a first binder, the second solid electrolyte layer includes a second binder, and the first binder and the second binder are different from each other.
Aspect 14) An all-solid state battery comprising the solid electrolyte sheet according to anyone of aspects 1 to 13.
Aspect 15) The all-solid state battery of aspect 14, further comprising a cathode disposed on one surface of the first solid electrolyte layer; and an anode disposed on one surface of the second solid electrolyte layer.

According to an embodiment of the present disclosure, the solid electrolyte sheet having a wide range of a potential window may be provided.

According to another embodiment of the present disclosure, it is possible to suppress the reduction in the discharge capacity of the all-solid state battery during high-voltage charging.

According to another embodiment of the present disclosure, it is possible to suppress the reduction in the lifespan characteristics of the all-solid state battery during high-voltage charging.

Only specific examples of implementations of certain embodiments are described. Variations, improvements and enhancements of the disclosed embodiments and other embodiments may be made based on the disclosure of this patent document.

## Claims

1. A solid electrolyte sheet comprising:
a first solid electrolyte layer and a second solid electrolyte layer, respectively including a solid electrolyte,
wherein, during LSV analysis according to linear sweep voltammetry, in the first solid electrolyte layer, a voltage at which an oxidation peak appears is more than 2.8 V (Li/Li+) or no oxidation peak appears, and
in the second solid electrolyte layer, a voltage at which a reduction peak appears is -1.0 V (Li/Li+) or more and less than 1.0 V (Li/Li+).

2. The solid electrolyte sheet of claim 1, wherein the voltage at which the oxidation peak appears is a voltage at a point at which a linear sweep voltammogram of the first solid electrolyte layer according to LSV analysis intersects a trend line of the solid electrolyte included in the first solid electrolyte layer according to LSV analysis at a specific current density value.

3. The solid electrolyte sheet of claim 1 or 2, wherein the voltage at which the reduction peak appears is a voltage at a point at which a linear sweep voltammogram of the second solid electrolyte layer according to LSV analysis intersects a trend line of the solid electrolyte included in the second solid electrolyte layer according to LSV analysis at a specific current density value.

4. The solid electrolyte sheet of anyone of claims 1 to 3, wherein the first solid electrolyte layer includes a first binder, the second solid electrolyte layer includes a second binder, and the first binder and the second binder are different from each other.

5. The solid electrolyte sheet of claim 4, wherein the first binder includes at least one of polyvinylidene fluoride-hexafluoropropylene copolymer (PVDF-co-HFP), polyvinylidene fluoride (PVDF), and nitrile butadiene rubber (NBR).

6. The solid electrolyte sheet of claim 4 or 5, wherein the second binder includes at least one of butadiene rubber (BR) and styrene-butadiene rubber (SBR).

7. The solid electrolyte sheet of anyone of claims 1 to 6, wherein the solid electrolyte includes a sulfide-based solid electrolyte.

8. The solid electrolyte sheet of claim 7, wherein
the sulfide-based solid electrolyte includes an argyrodite-based compound represented by Chemical Formula 1 below:
[Chemical Formula 1] Li⁺ₐA⁺_{b}Q_{c}X⁻_{d}
where 1≤a≤12, 0≤b≤5, 0≤c≤10, 0≤d≤2, A is at least one of P, As, Ge, Ga, Sb, Si, Sn, Al, In, Ti, V, Nb, or Ta, Q is at least one of S, Se, or Te, and X is at least one of Cl, Br, I, F, CN, OCN, SCN, or N₃.

9. The solid electrolyte sheet of anyone of claims 1 to 8, further comprising a base layer between the first solid electrolyte layer and the second solid electrolyte layer.

10. The solid electrolyte sheet of claim 9, wherein the base layer includes a porous compound having a porosity of 60% or more.

11. The solid electrolyte sheet of claim 9 or 10, wherein a thickness of the base layer is 10 to 20 µm.

12. The solid electrolyte sheet of anyone of claims 1 to 11, wherein thicknesses of the first solid electrolyte layer and the second solid electrolyte layer are each 10 to 80 µm.

13. The solid electrolyte sheet of claim 1, further comprising:
a base layer between the first solid electrolyte layer and the second solid electrolyte layer,
wherein the first solid electrolyte layer and the second solid electrolyte layer include a sulfide-based solid electrolyte,
the first solid electrolyte layer includes a first binder,
the second solid electrolyte layer includes a second binder, and
the first binder and the second binder are different from each other.

14. An all-solid state battery comprising the solid electrolyte sheet according to anyone of claims 1 to 13.

15. The all-solid state battery of claim 14, further comprising a cathode disposed on one surface of the first solid electrolyte layer; and an anode disposed on one surface of the second solid electrolyte layer.
